# EUROPÄISCHE PATENTSCHRIFT

(11) **EP 2 036 422 B1**
(45) Veröffentlichungstag und Bekanntmachung des Hinweises auf die Patenterteilung: **20.04.2011**
(21) Anmeldenummer: 08158215.7
(22) Anmeldetag: 13.06.2008
(51) Int. Cl.: A01D 41/12

(54) **Mähdrescher mit Strohhäcksler**
Combine harvester with straw shredder
Moissonneuse-batteuse dotée d'un système à hacher la paille

(30) Priorität: 12.09.2007 DE 102007043524
(43) Veröffentlichungstag der Anmeldung: 18.03.2009
(73) Patentinhaber: CLAAS Selbstfahrende Erntemaschinen GmbH, 33428 Harsewinkel (DE)
(72) Erfinder: Niermann, Martin, D-33428, Harsewinkel (DE); Kucerin, Sergej, 32602, Vlotho (DE); Amsbeck, Dieter, 33428, Harsewinkel (DE); Hay, Jonas, 33790, D-Halle/Westf. (DE); Nollmann, Jürgen, 33775, Versmold (DE); Terörde, Stefan, 48231, Warendorf (DE); Buchmann, Markus, 33428, Harsewinkel (DE)

(56) Entgegenhaltungen:
- EP-A- 0 631 717
- EP-A- 1 277 387
- EP-A- 1 869 969
- DE-A1- 10 029 715
- US-A1- 2007 066 370

## Beschreibung

Die vorliegende Erfindung betrifft einen Mähdrescher mit einer Austragvorrichtung, die ausgedroschenes Stroh zerkleinert und auf einen soeben abgeernteten Ackerstreifen wieder verteilt.

Idealerweise sollte der Ackerstreifen, auf dem der fahrende Mähdrescher das gehäckselte Stroh ausstreut, genauso breit sein wie der gleichzeitig von einem Erntevorsatz des Mähdreschers abgeerntete Ackerstreifen, um eine gleichmäßige Verteilung des gehäckselten Materials auf der gesamten Ackerfläche zu erzielen. Die Anforderung nach einer gleichmäßigen Verteilung des Häckselguts ist umso schwieriger zu erfüllen, je breiter der Erntevorsatz bzw. der zu bestreuende Ackerstreifen ist, einerseits weil das gehäckselte Stroh mit einer umso größeren Geschwindigkeit quer zur Fahrtrichtung des Mähdreschers ausgeworfen werden muss, je breiter dieser Streifen ist, andererseits, weil Ungleichmäßigkeiten im Fluss des ausgedroschenen Strohs innerhalb des Mähdreschers sich auf die Verteilung des Häckselguts hinter dem Mähdrescher auswirken.

Aus DE 100 29 715 A1 ist eine Austragvorrichtung für einen Mähdrescher bekannt, bei der ein Strohhäcksler eine mit Messern besetzte, quer zur Fahrtrichtung des Mähdreschers ausgerichtete Welle aufweist, und eine Verteilereinrichtung zum Empfangen eines Stroms von gehäckseltem Stroh von dem Strohhäcksler und zum Ausstreuen des gehäckselten Strohs eine Vielzahl von über die Breite des wirksamen Bereichs des Strohhäckslers verteilten schwenkbaren Leitblechen aufweist. Das entgegen der Fahrtrichtung aus dem Strohhäcksler ausgeschleuderte Stroh prallt auf die Leitbleche und wird an diesen zur Seite abgelenkt. Indem die Leitbleche pendelnd bewegt werden, wird das Stroh abwechselnd mehr nach rechts oder mehr nach links ausgeworfen.

Dabei ergibt sich das Problem, dass das ausgedroschene Stroh nicht gleichmäßig vom Abscheider in den Strohhäcksler gelangt, sondern dass die örtliche und zeitliche Verteilung des Strohs schwankt, was zu entsprechenden Schwankungen in der Verteilung des ausgeworfenen Häckselguts führt. Wenn zum Beispiel die Leitbleche eine Stellung haben, in der sie nach links ablenken, der Strohhäcksler aber auf seiner linken Seite unterfüllt ist, kann das im Wesentlichen von der rechten Seite des Strohhäckslers herrührende Häckselgut nicht weit genug nach links geworfen werden, um eine gleichmäßige Schicht auf dem Acker zu erzeugen.

Aus EP 0 631 717 A1 ist anderes Konstruktionsprinzip einer Austragvorrichtung bekannt, bei der das Häckselgut aus dem Strohhäcksler über einen Übergabetrichter nach unten zu einem Wurfgebläse abfließt. Der Rotor des Wurfgebläses verleiht dem Häckselgut erst die für die Verteilung auf dem Feld erforderliche Geschwindigkeit. Die Verteilung des Häckselguts ist durch einen dem Wurfgebläse nachgeschalteten pendelnd beweglichen Auswurfstutzen gesteuert. Da die Funktionen des Häckselns und des Beschleunigens des Häckselguts auf verschiedene Einrichtungen verteilt sind, ist der Aufbau der Austragvorrichtung aufwändig und kompliziert.

Aufgabe der Erfindung ist daher, einen Mähdrescher mit einer Austragvorrichtung zu schaffen, die mit einem einfachen Aufbau eine gleichmäßig Verteilung des gehäckselten Strohs auf einem Ackerstreifen von großer Breite ermöglicht.

Die Aufgabe wird gelöst, indem bei einem Mähdrescher mit einem Strohhäcksler, der ausgelegt ist, gehäckseltes Stroh entgegen der Fahrtrichtung des Mähdreschers auszuschleudern, und einem in Fahrtrichtung hinter dem Strohhäcksler angeordneten Umlenker zum Empfangen eines Stroms von gehäckseltem Stroh von dem Strohhäcksler und zum Ausstreuen des gehäckselten Strohs auf dem Weg des Strohs von dem Strohhäcksler zu den Umlenkern ein Engpass zum Einstellen des Querschnitts des Stroms wenigstens in Längsrichtung der Welle angeordnet ist. Indem der Umlenker in Fahrtrichtung hinter dem Strohhäcksler platziert ist, kann ein Anfangsimpuls, mit dem das Stroh den Strohhäcksler verlässt, genutzt werden, um das Stroh ohne eine weitere Umlenkung geradeaus entgegen der Fahrtrichtung auszuschleudern, ohne dass stromabwärts von dem Engpass ein Wurfgebläse oder andere Hilfsmittel zum Nachbeschleunigen des Strohs erforderlich sind. Durch den Engpass wird an verschiedenen Stellen entlang der Welle gehäckseltes Stroh zusammengeführt, so dass die Wurfweite des Strohs in seitlicher Richtung nicht mehr von einer eventuell ungleichmäßigen Verteilung des Strohs entlang der Welle des Strohhäckslers abhängt.

Die Austragvorrichtung kann in dem Mähdrescher fest eingebaut sein, oder es kann sich um ein nach Bedarf daran montierbares Zubehörteil handeln.

Der Strohhäcksler weist vorzugsweise eine mit Messern besetzte, quer zur Fahrtrichtung des Mähdreschers ausgerichtete Welle auf.

Um eine ausreichende Bündelung des Strohs zu erreichen, sollte die lichte Weite des Engpasses in Längsrichtung der Welle höchstens zwei Drittel der Breite des mit Messern besetzten Abschnitts der Welle des Strohhäckslers betragen. Um die Gefahr einer Verstopfung zu minimieren, sollte die lichte Weite des Engpasses ein Viertel dieser Breite nicht unterschreiten.

Es ist an sich bekannt, zwei Abscheider parallel zueinander in einem Mähdrescher anzubringen, die parallel zueinander Ströme von ausgedroschenem Stroh liefern, und so die Ungleichmäßigkeit der Strohverteilung entlang der Häckslerwelle zu reduzieren. Zwar kann der Strohhäcksler gemäß der voliegenden Erfindung auch von zwei parallelen Abscheidern mit Stroh beschickt werden, doch macht durch den Engpass erzielte Vergleichmäßigung macht eine solche Maßnahme unnötig, weswegen erfindungsgemäß der Strohhäcksler vorzugsweise durch Stroh von einem einzigen Abscheider gespeist ist.

Um den Strom des Strohs bei der Bündelung in dem Engpass möglichst wenig Impuls zu entziehen, ist der Strom zwischen einem Austrittsspalt des Strohhäckslers und dem Engpass vorzugsweise zwischen aufeinander zulaufenden, eine Düse bildenden seitlichen Wänden geführt.

Eine weitere wichtige Maßnahme zum Verhindern von Impulsverlusten beim Durchgang durch den Engpass ist ein Gebläse zum Erzeugen eines vom Strohhäcksler aus durch den Engpass verlaufenden Luftstroms.

Vorzugsweise ist dieses Gebläse durch von der Welle getragene Luftschaufeln gebildet.

Besonders vorteilhaft ist, wenn jeweils ein Gebläse auf jeder Seite des wirksamen Bereichs des Strohhäckslers vorgesehen ist, um insbesondere entlang der besagten seitlichen Wände einen kräftigen Luftstrom zu erzeugen, der eventuell durch Aufprall auf eine der seitlichen Wände abgebremstes Häckselgut wieder beschleunigt und mitreißt.

Einer ersten Gruppe von Ausgestaltungen der Erfindung zufolge weist der pendelnd bewegbare Umlenker zwei Wände beiderseits des Engpasses auf, um den Strom des Strohs nach Durchtritt durch den Engpass seitlich zu führen.

Einer einfachen Ausgestaltung zufolge können die zwei Wände starr miteinander verbunden sein. Um die nötige Schwenkbewegungsfreiheit des Umlenkers zu gewährleisten und gleichzeitig zu verhindern, dass in einer Stellung des Umlenkers der Strom des Strohs gegen eine Vorderkante einer Wand des Umlenkers trifft, ist bevorzugt, dass die zwei Wände in Strahlrichtung konvergieren.

Einer anderen Ausgestaltung zufolge sind die Wände des Umlenkers um verschiedene, jeweils einem Rand des Engpasses benachbarte Achsen schwenkbar, um in jeder Stellung des Umlenkers einen möglichst kontinuierlichen Übergang von einem Rand des Engpasses zu der daran anschließenden Wand des Umlenkers zu schaffen.

Zweckmäßigerweise sind die Wände dieses Umlenkers gekoppelt, um aus einer zur Fahrtrichtung symmetrischen Stellung jeweils zur gleichen Seite zu schwenken. Dabei sollte die Winkelauslenkung der in Schwenkrichtung gelegenen Wand jeweils größer sein als die der entgegen der Schwenkrichtung gelegenen Wand, um zu verhindern, dass der freie Querschnitt des Umlenkers mit zunehmender Auslenkung aus der symmetrischen Stellung kleiner wird.

Eine solche Koppelung kann auf einfache Weise gewährleistet werden mit Hilfe von von den Außenseiten der Wände des Umlenkers abstehenden Auslegern, an die eine gemeinsame Koppelstange angelenkt ist.

Der Abstand zwischen zwei Gelenken, die die Wände des Umlenkers mit der Koppelstange verbinden, sollte größer sein als der Abstand zwischen zwei Gelenken, die die Wände des Umlenkers mit den Rändern des Engpasses verbinden.

Wenn der Strom wie oben erwähnt zwischen dem Strohhäcksler und dem Engpass durch eine Düse geführt ist, ist der Umlenker vorzugsweise zwischen zwei Anschlagstellungen bewegbar, in denen jeweils eine Wand des Umlenkers eine angrenzende Wand der Düse richtungsgleich verlängert. So ist ein mehrfacher Impulsverlust von Häckselgut durch mehrfaches Anstoßen an derselben Seite der Düse bzw. des Umlenkers ausgeschlossen.

Bei einer zweiten Gruppe von Ausgestaltungen umfasst der Umlenker wenigstens eine den Engpass kreuzende Wand. Insbesondere eine solche Wand kann aus mehreren Segmenten zusammengesetzt sein, die an ihren Rändern gelenkig verbunden sind, um eine den Strom des Strohs allmählich auf einen gekrümmten Weg führende Kontur zu bilden.

Zu demselben Zweck kann die Wand des Umlenkers aus mehreren um eine gemeinsame Achse drehend teleskopierbaren Segmenten zusammengesetzt sein.

Eine dem Strom des Strohs ausgesetzte Seite der Wand des Umlenkers ist im Schnitt quer zur Stromrichtung vorzugsweise konkav, um den Strom in vertikaler Richtung gebündelt zu halten.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: eine schematische Darstellung eines Mähdreschers mit einem Strohhäcksler und einem daran angeschlossenen Umlen- ker zum Verteilen des gehäckselten Strohs auf einem Acker;
- Fig. 2: einen schematischen Schnitt durch den Strohhäcksler und eine daran anschlie- β ende Düse;
- Fig. 3: eine schematische perspektivische An- sicht des Strohhäckslers, der Düse und des Umlenkers gemäß einer ersten Aus- gestaltung der Erfindung;
- Fig. 4: eine Draufsicht auf die Düse und den Umlenker der Fig. 3 in einer symmetri- schen Stellung zum Auswerfen des ge- häckselten Strohs entgegen der Fahrt- richtung des Mähdreschers;
- Fig. 5: eine Draufsicht auf die Düse und den Umlenker der Fig. 3 in einer zur Seite ausgelenkten Anschlagstellung;
- Fig. 6: eine schematische perspektivische An- sicht der Düse und des Umlenkers gemäß einer zweiten Ausgestaltung der Erfin- dung;
- Fig. 7: eine Draufsicht auf die Düse und den Umlenker der Fig. 6 in einer Stellung zum Auswerfen des gehäckselten Strohs entgegen der Fahrtrichtung;
- Fig. 8: eine Draufsicht auf die Düse und den Umlenker der Fig. 6 in einer zur Seite ausgelenkten Anschlagstellung;
- Fig. 9: eine perspektivische Ansicht der Düse und des Umlenkers gemäß einer dritten Ausgestaltung der Erfindung;
- Fig. 10: eine Abwandlung der Ausgestaltung aus Fig. 9;
- Fig. 11: eine perspektivische Ansicht der Düse und des Umlenkers gemäß einer vierten Ausgestaltung der Erfindung;
- Fig. 12A, B, C: schematische Draufsichten auf eine erste Ausgestaltung einer Kop- peleinrichtung zum Antreiben einer Pen- delbewegung der in den Fig. 3 bis 5, 6 bis 8, 9 bzw. 10 gezeigten Umlenker;
- Fig. 13: ein Diagramm zur Veranschaulichung des Bewegungsablaufs der Koppeleinrichtung;
- Fig. 14: eine Variante der Pleuelstange der Kop- peleinrichtung der Fig. 12A bis 12C;
- Fig. 15: ein zu Fig. 13 analoges Diagramm des Bewegungsablaufs bei Verwendung der Pleuelstange aus Fig. 14
- Fig. 16: eine perspektivische Ansicht einer zweiten Ausgestaltung der Koppelein- richtung; und
- Fig. 17: eine zu Fig. 16 analoge Ansicht einer dritten Ausgestaltung der Koppelein- richtung.

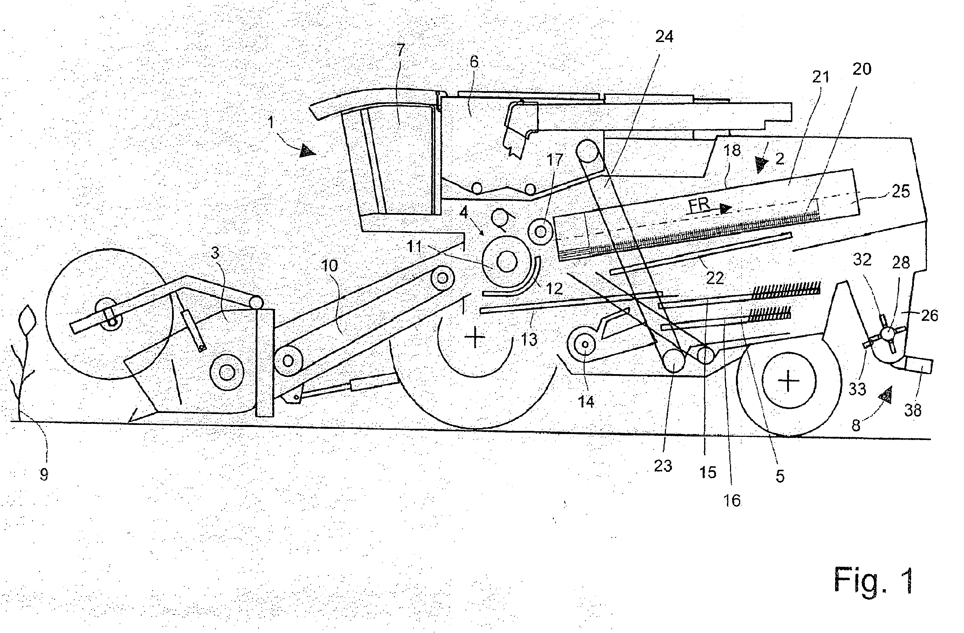

Der in Fig. 1 schematisch dargestellte Mähdrescher 1 hat als wesentliche Komponenten ein Schneidwerk 3 zum Schneiden und Aufnehmen von Erntegut 9, eine Drescheinrichtung 4, eine Reinigungseinrichtung 5, einen Axialabscheider 2, einen Korntank 6, eine Fahrerkabine 7 sowie einen dem Axialabscheider 2 nachgeordneten Strohhäcksler 8. Das vom Schneidwerk 3 abgeschnittene Erntegut 9 gelangt über einen Schrägförderkanal 10 zu der nach dem Tangentialprinzip arbeitenden Drescheinrichtung 4. Diese umfasst eine Dreschtrommel 11 und einen zugeordneten Dreschkorb 12. Die am Dreschkorb 12 abgeschiedenen Erntegutbestandteile werden über einen Förderboden 13 zu der Reinigungseinrichtung 5 geleitet, die hier ein Gebläse 14 und ein Ober- und Untersieb 15 bzw. 16 umfasst.

Das den Dreschkorb 12 in tangentialer Richtung verlassene Korn-Kurzstrohgemisch wird zum Axialabscheider 2 befördert. Eine parallel zur Dreschtrommel 11 angeordnete rotierende Wendetrommel 17 unterstützt den Fördervorgang. Der Axialabscheider 2 ist in Längsrichtung des Mähdreschers 1 angeordnet und besteht im Wesentlichen aus einem feststehenden, in Förderrichtung FR ansteigenden zylindrischen Gehäuse 18, in dem ein drehbar angetriebener, nicht dargestellter Rotor gelagert ist. Das Gehäuse 18 weist einen unteren Bereich mit Abscheiderosten 20 und einen geschlossenen oberen Deckbereich 21 mit an der Innenseite angeordneten Leiteinrichtungen zur Unterstützung der Förderbewegung des Erntegutes auf. Der Umfangsbereich des Rotors ist mit Zinken oder Leisten versehen, die den Abscheidevorgang intensivieren. An den Abscheiderosten 20 werden die im Erntegutgemisch enthaltenen Körner sowie Anteile von Kurzstroh und Spreu abgeschieden. Sie gelangen über den darunter liegenden Rücklaufboden 22 zur Reinigungseinrichtung 5. Die in letzterer gereinigten Körner werden über eine horizontale Förderschnecke 23 und einen Elevator 24 in den Korntank 6 gefördert.

Das Stroh wird im Axialabscheider 2 zu einer rückwärtigen Kante 25 desselben gefördert. Von der rückwärtigen Kante 25 fällt das Stroh in einen Trichter 26, an dessen Boden der Strohhäcksler 8 angeordnet ist. Am Ausgang des Axialabscheiders 2 strömt das Stroh nicht zeitlich und örtlich gleichmäßig verteilt über die Kante 25, sondern ist jeweils auf einzelne Abschnitte der Kante 25 konzentriert, deren Lage im Laufe der Zeit zufällig variiert.

Der Strohhäcksler 8 umfasst eine mit Messern 32 bestückte, um eine horizontale, quer zur Fahrtrichtung des Mähdreschers 1 orientierte Achse drehbare Welle 28 sowie gehäusefeste Messer 33. Die gehäusefesten Messer 33 sind in Fig. 1 in einer zwischen die rotierenden Messer 32 eingreifenden Stellung gezeigt; sie können aus dem Gehäuse des Häckslers 8 herausschwenkbar sein, um den Bedarf des Häckslers 8 an Antriebsenergie zu verringern, wenn die rotierenden Messer 32 allein eine hinreichende Zerkleinerung bewirken.

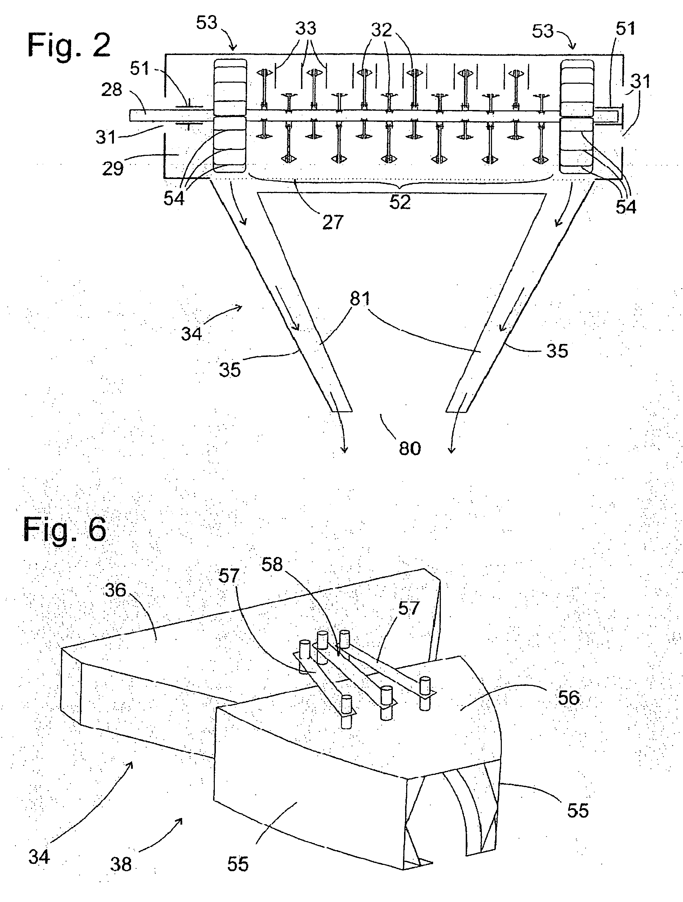

Fig. 2 zeigt einen schematischen Schnitt durch den Strohhäcksler 8. Ein Gehäuse 29 des Strohhäckslers 8 hat einen im Wesentlichen zylindrischen Hohlraum, in dem eine Welle 28 zwischen Lagern 51 drehbar gehalten ist. Die Welle 28 ist zwischen den Lagern 51 in drei Abschnitte gegliedert, einem mit den Messern 32 bestückten mittleren Abschnitt 52, sowie daran angrenzende äußere Abschnitte 53, die mit radial abstehenden Luftschaufeln 54 besetzt sind.

Von den Messern 32, 33 zerkleinertes Stroh verlässt den Strohhäcksler 8 durch einen Auslassschlitz 27, der sich über die gesamte Breite der Wellenabschnitte 52, 53 erstreckt. Angetrieben von den hochtourig drehenden Messern 32 tritt das gehäckselte Stroh mit hoher Geschwindigkeit in eine sich an den Auslassschlitz 27 anschließende Düse 34 ein. Die rotierenden Luftschaufeln 54 saugen Außenluft durch Öffnungen 31 an den Stirnseiten des Strohhäckslergehäuses 29 ein und blasen sie ebenfalls in die Düse 34. Aufeinander zulaufende Seitenwände 35 der Düse 34 bündeln sowohl die von den Luftschaufeln 54 angetriebenen Luftströme als auch den Strom des Häckselguts, wobei durch Aufprall auf die Seitenwände 35 der Düse 34 abgebremstes Stroh von der an den Seitenwänden 35 entlang strömenden Luft wieder beschleunigt und mitgerissen wird. An einem Engpass 80 am stromabwärtigen Ende der Düse 34 wird durch die Querschnittsverengung ein Strom von gehäckseltem Stroh von im Wesentlichen gleichförmiger Dichte und gleichmäßige Massendurchsatz erhalten, trotz einer eventuell ungleichmäßigen Verteilung des zu häckselnden Strohs entlang der Welle 28.

Die Seitenwände 35 der Düse 34 können durch eine geschlossene Bodenplatte miteinander verbunden sein; in der in Fig. 2 gezeigten Ausgestaltung ist das Innere der Düse nach unten hin offen, indem die Bodenplatte im Wesentlichen auf sich entlang der Seitenwände 35 erstreckende Stege 81 reduziert ist, die die von den Luftschaufeln 54 angetriebenen Luftströmungen gebündelt halten und durch Zusammenstöße miteinander oder mit den Seitenwänden 35 zu stark verlangsamte Strohteilchen auffangen, um deren Wiederbeschleunigung im Luftstrom zu ermöglichen. Der großflächige Ausschnitt zwischen den Stegen 81 verhindert, dass bei einem Ausschalten des Häckslers 8 Stroh in der Düse 34 zurückbleibt, das bei Wiederinbetriebnahme zu Verstopfungen führen könnte.

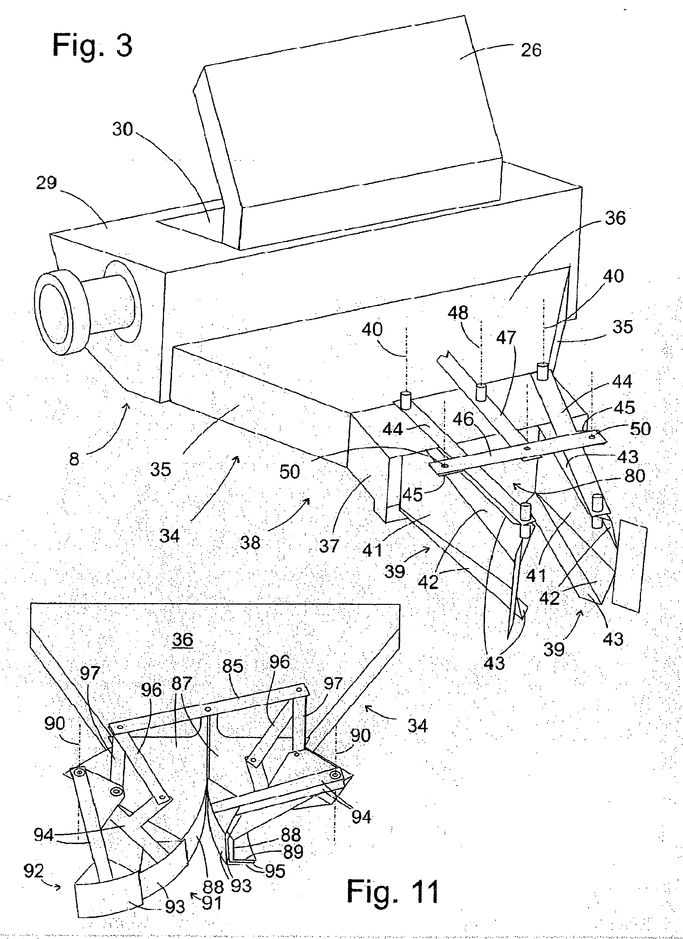

Fig. 3 zeigt den Strohhäcksler 8, die Düse 34 und einen daran angeschlossenen Umlenker in einer schematischen perspektivischen Ansicht gemäß einer ersten Ausgestaltung der Erfindung. An der Oberseite des Gehäuses 29 des Strohhäckslers 8 ist ein Stück des Trichters 26 und einer Einfüllöffnung 30 sichtbar, durch die das zu häckselnde Stroh in das Gehäuse 29 gelangt; der Auslassschlitz 27 ist durch die Düse 34 verdeckt. Die vom Strohhäcksler 8 fort aufeinander zulaufenden Seitenwände 35 sind durch eine im Wesentlichen horizontale, geschlossene Oberseite 36 verbunden.

Indem die Seitenwände 35 den Strom des Häckselguts quer zur Fahrtrichtung des Mähdreschers bündeln, wird eine Vergleichmäßigung des Stroms, sowohl in zeitlicher als auch in räumlicher Hinsicht, erzielt, die die Neigung des Strohs, ungleichmäßig verteilt die Kante 25 zu passieren, ausgleicht und Voraussetzung für eine gleichmäßige Verteilung des gehäckselten Strohs auf dem Feld ist.

Rings um eine Auslassöffnung der Düse 34 ist ein Rahmen 37 montiert, an dem zwei Leitbleche 39 um vertikale, in etwa in Verlängerung der Seitenwände 35 liegende Achsen 40 schwenkbar aufgehängt sind. Die einander zugewandten Seiten der Leitbleche 39 sind konkav geformt, mit jeweils einem vertikalen, sich in Richtung des Häckselgutstrahls trapezförmig verjüngenden Mittelstück 41, an das Mittelstück 41 oben und unten im Querschnitt stumpfwinklig angrenzenden, sich in Strahlrichtung verbreiternden Seitenstücken 42 und wiederum an diese angrenzenden horizontalen Stegen 43. Diese Querschnittsform der Leitbleche 39 dient einer zusätzlichen Bündelung des Häckselgutstrahls in vertikaler Richtung beim Durchgang zwischen den Leitblechen 39.

Zwei Lenker 44 sind mit den freien Enden der oberen Stege 43 verbunden und zusammen mit den Leitblechen 39 um die Achsen 40 schwenkbar. Von den Lenkern 44 jeweils nach außen abstehende Arme 45 sind miteinander über einen Querbügel 46 gelenkig verbunden, an dem mittig ein dritter Lenker 47 eingreift, der seinerseits um eine mittig zwischen den Achsen 40 verlaufende Achse 48 schwenkbar ist. Der Lenker 47 ist in Fig. 2 als Bruchstück dargestellt. Ein am nicht dargestellten Ende des Lenkers 47 angreifender Antriebsmechanismus wird an späterer Stelle beschrieben.

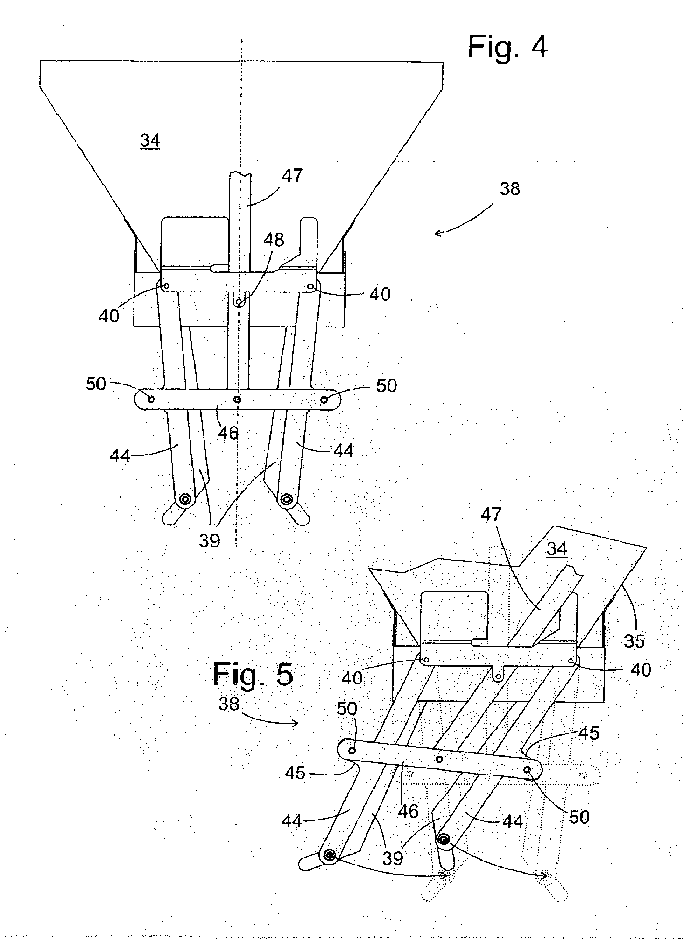

Fig. 4 zeigt die Düse 34 und den von dem Rahmen 37 und den Leitblechen 39 gebildeten Umlenker der Fig. 3 in einer Draufsicht. Die beiden Leitbleche 39 liegen sich bezüglich einer Symmetrieebene der Düse 34 spiegelbildlich gegenüber und bündeln den aus der Düse 34 austretenden Häckselgutstrahl, ohne dessen durch die Düse 34 vorgegebene Richtung zu verändern.

Fig. 5 zeigt denselben Umlenker (Verteiler 38) mit in eine linke Anschlagstellung ausgelenkten Leitblechen 39. Das rechte Leitblech 38 verlängert richtungsgleich die rechte Seitenwand 35 der Düse. Häckselgut, das bereits an der rechten Seitenwand 35 abgelenkt worden ist, prallt daher nicht erneut auf die Leitbleche 39, so dass eine unnötige Abbremsung der Häckselguts vermieden und eine große Wurfweite, allein durch den dem Häckselgut im Strohhäcksler 8 verliehenen Impuls und unterstützt durch die Luftströmungen von den Luftschaufeln 54, erreicht werden kann.

Da der Abstand zwischen den den Querbügel 46 mit den Armen 45 verbindenden Gelenken 50 größer ist als zwischen den Achsen 40, ist in der gezeigten Stellung die Winkelauslenkung des linken Leitblechs 39 größer als die des rechten. Der Abstand der Gelenke 50 voneinander ist so angepasst, dass die lichte Weite des von den Leitblechen 39 begrenzten Durchgangs in der Anschlagstellung der Fig. 5 nicht kleiner und vorzugsweise im Wesentlichen genauso groß ist wie in der symmetrischen Stellung der Fig. 4, um den Durchtritt des Häckselgutstrahls auch in der Anschlagstellung so wenig wie möglich zu beeinträchtigen.

Fig. 6 zeigt eine perspektivische Ansicht der Düse 34 zusammen mit einer zweiten Ausgestaltung des Umlenkers. Die Düse 34 ist dieselbe wie mit Bezug auf Fig. 2 und 3 bereits beschrieben; die an ihren einander zugewandten Oberflächen konvexen Leitbleche 55 des Umlenkers sind durch eine Deckplatte 56 zu einer starren Einheit verbunden. Diese starre Einheit ist wie die Düse 34 unterseits offen, um auszuschließen, dass Häckselgut darin hängen bleibt und den Weg des Strahls verstopfen kann.

Drei jeweils schwenkbar mit der Deckplatte 56 und der Oberseite 36 der Düse 34 verbundene Lenker 57, 58, 57 tragen den Umlenker.

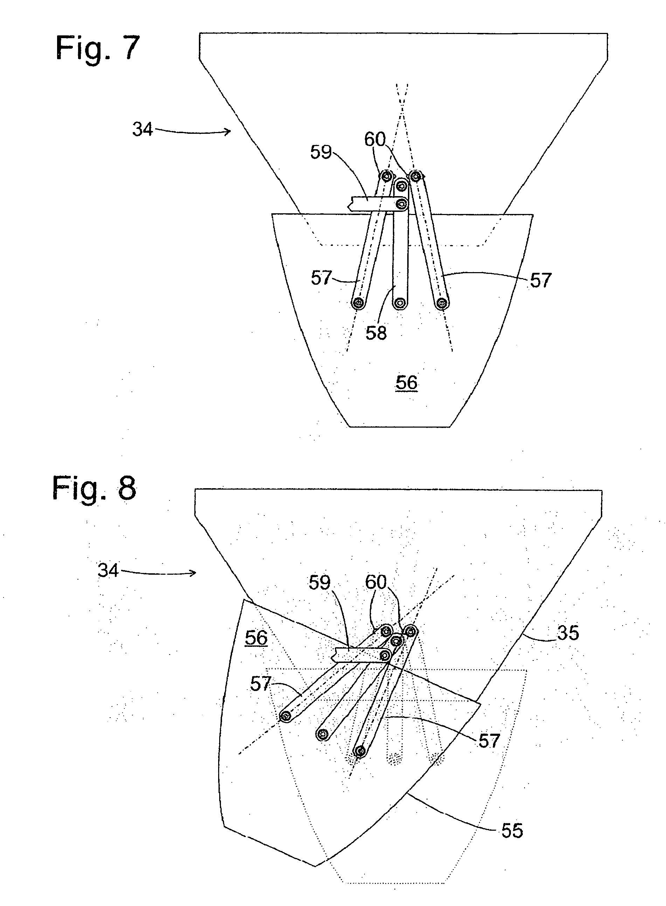

Wie in der Draufsicht der Fig. 7 gezeigt, greift an dem mittleren Lenker 58 eine Pleuelstange 59 einer ansonsten nicht dargestellten Antriebsvorrichtung ein, um eine Pendelbewegung der Leitbleche 55 zwischen der in Fig. 7 gezeigten spiegelsymmetrischen Mittelstellung und jeweils nach rechts bzw. links ausgelenkten Anschlagstellungen anzutreiben, von denen die nach links ausgelenkte in Fig. 8 gezeigt ist. Die in Strahlrichtung auseinander laufenden äußeren Lenker 57 führen die Schwenkbewegung der Leitbleche 55, wobei die momentane Schwenkachse jeweils durch den Schnittpunkt der Längsachsen der beiden Lenker 57 festgelegt ist. In der Oberseite 36 der Düse sind die beiden äußeren Lenker 57 jeweils in Langlöchern 60 verschiebbar.

Auch in dieser Ausgestaltung sind die Anschlagstellungen der Schwenkbewegungsfreiheit des Verteilers 38 so festgelegt, dass wie in Fig. 8 gezeigt jeweils eine Seitenwand 35 der Düse 34 durch ein jeweils angrenzendes Leitblech 55 des Umlenkers richtungsgleich verlängert wird.

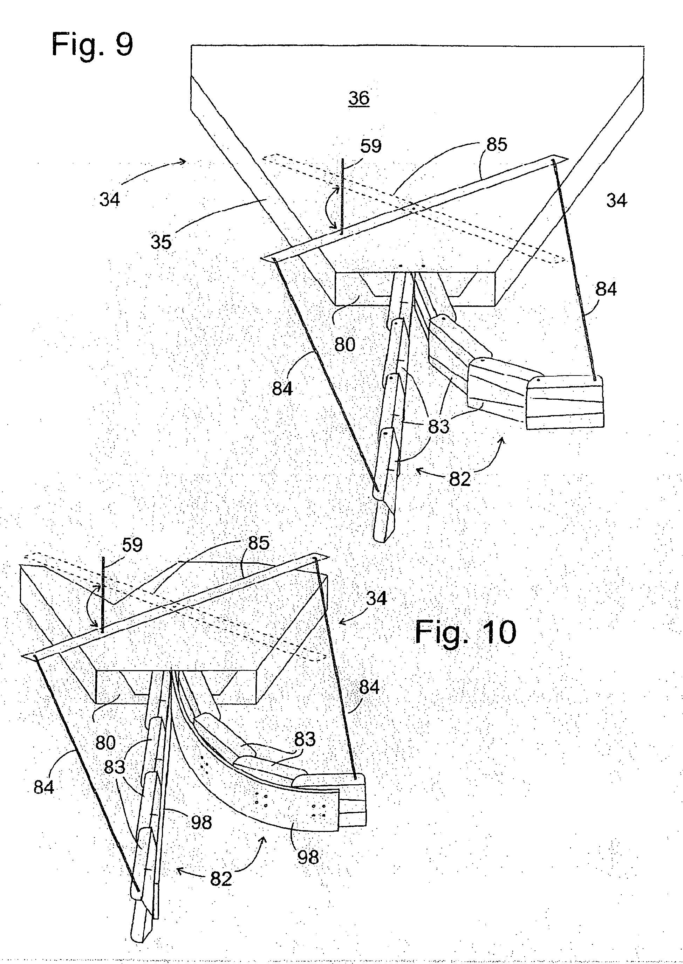

Fig. 9 zeigt eine perspektivische Ansicht der Düse 34 und des daran angeschlossenen Umlenkers gemäß einer dritten Ausgestaltung der Erfindung. Zwei aus gelenkig verbundenen Segmenten 83 zusammengesetzte Leitbleche 82 erstrecken sich von der Mitte des Engpasses 80 der Düse 34 aus. Die der Düse 34 zugewandte Kante eines jeden Segments 83 mit Ausnahme des vordersten ist durch das jeweils davorliegende, teilweise überlappende Segment vor dem Strahl des Häckselguts abgeschirmt. An dem am weitesten von der Düse 34 entfernten Segment 83 der zwei Leitbleche 82 greift jeweils ein stabförmiger Lenker 84 an. Die beiden Lenker 84 sind über einen Querbügel 85 verbunden. Der Querbügel ist in Richtung eines Pfeils zwischen der Fig. 9 aus durchgezogener im Umriss gezeigten Stellung und einer als gestrichelter Umriss dargestellten Stellung pendelnd beweglich und durch eine Pleuelstange 59 angetrieben. In der durchgezogen gezeigten Stellung hält der Querbügel 85 das linke Leitblech 82 geradlinig ausgestreckt, so dass ein die linke Hälfte des Engpasses 80 passierender Teil des gehäckselten Strohs nicht umgelenkt und geradeaus nach hinten ausgestreut wird. Das rechte Leitblech 82 hingegen ist in einer stark gekrümmten Konfiguration gehalten, in der der die rechte Hälfte des Engpasses 80 passierende Teil des Strohs nach rechts geworfen wird. Wenn sich der Querbügel 85 in der gestrichelten Stellung befindet, wird das Stroh über die rechte Hälfte des Engpasses 80 geradeaus ausgeworfen, während der die linke Hälfte passierende Anteil nach links geworfen wird.

Die einzelnen Segmente 83 haben jeweils an ihrer dem Häckselgutstrahl zugewandten Oberfläche einen konkaven Querschnitt ähnlich dem der Leitbleche 39, um wie diese das abgelenkte Häckselgut in vertikaler Richtung zu bündeln.

Fig. 10 zeigt den Umlenker und einen Teil der Düse 34 gemäß einer gegenüber Fig. 9 leicht abgewandelten Ausgestaltung. Die Segmente 83 sind hier nicht wie in Fig. 9 jeweils miteinander durch Gelenke verbunden, sondern sie sind jeweils einzeln an einem langgestreckten elastischen Element 98, etwa einem Streifen aus Federblech oder aus Elastomermaterial, befestigt. Das elastische Element 98 verhindert abrupte Knicke in den Leitblechen 82, die zu einer unerwünscht starken Abbremsung des Häckselgutstrahls führen könnten. Die Bewegung der Leitbleche 82 ist in derselben Weise gesteuert, wie mit Bezug auf Fig. 9 beschrieben.

Eine vierte Ausgestaltung, die ähnlich wie die der Fig. 9 wirkt, ist in Fig. 11 dargestellt. Hier sind an der Oberseite 36 der Düse 34 Oberseiten zweier zueinander spiegelbildlicher Führungselemente 87 befestigt, die jeweils eine kreisbogenförmig von der Mitte des in der Fig. verdeckten Engpasses 80 ausgehende Seitenwände 88 sowie einen an den unteren Rand der Seitenwand 88 anschließenden Steg 89 aufweisen. Die Krümmung der Seitenwand 88 definiert eine Achse 90, um die mehrere weitere Führungselemente 91, 92 schwenkbar sind. Diese umfassen ebenfalls jeweils eine kreisbogenförmig gekrümmte Seitenwand 93, einen Schwenkarm 94, der am oberen Rand der Seitenwand 93 angreift und sie mit der Achse 90 verbindet, sowie einen Steg 95 entlang des unteren Randes der Seitenwand 93. Die Führungselemente 91, 92 sind mit Hilfe eines schwenkbaren Querbügels 85 pendelnd beweglich.

Fig. 11 zeigt in ihrer rechten Hälfte die Führungselemente 87, 91, 92 in einer teleskopisch übereinander geschobenen Stellung, in der die Führungselemente 91, 92 außen um das Führungselement 87 herum greifen und den Strom des Häckselguts nicht beeinflussen. Es wird daher lediglich durch das Führungselement 87 geringfügig nach rechts abgelenkt. Die linken Führungselemente 91, 92 befinden sich hingegen in einer ausgefahrenen Anschlagstellung, in der ihre Seitenwände 93 minimal miteinander und mit der Seitenwand 88 des Führungselements 87 überlappen und so das sie passierende Häckselgut maximal zur Seite ablenken.

Um die koordinierte Bewegung der Führungselemente 91, 92 zwischen ihren zwei Anschlagstellungen zu steuern, ist jedes von ihnen über einen eigenen Lenker 96, 97 mit dem Querbügel 85 verbunden. Indem der Lenker 97 des äußeren Führungselements 92 an dessen Schwenkarm 94 mit einem deutlich kürzeren Hebel angreift als der Lenker 96 am Schwenkarm 94 des Führungselements 91, werden unterschiedliche Übersetzungsverhältnisse zwischen der Drehung des Querbügels 85 und der der Führungselemente 91, 92 erreicht, so dass die Führungselemente 91, 92 zwischen der auf der rechten Seite der Fig. gezeigten teleskopisch übereinander geschobenen Stellung und einer aufgefächerten Stellung, wie auf der linken Seite der Fig. gezeigt, beweglich sind.

Im Folgenden werden verschiedene Ausgestaltungen von Antriebs- oder Kopplungsvorrichtungen beschrieben, die in gleicher Weise für die Umlenker der Fig. 3 bis 5, 6 bis 8, 9, 10 bzw. 11 geeignet sind.

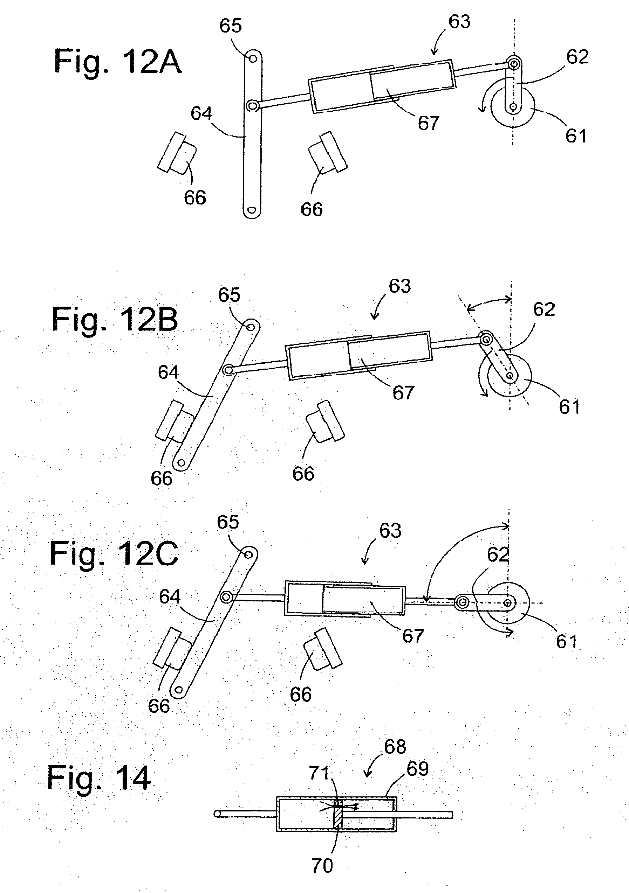

Das Grundprinzip der Antriebs- bzw. Kopplungsvorrichtung wird zunächst anhand der Fig. 12A bis 12C erläutert. In diesen Figuren ist mit 61 ein Motor oder ein beliebiger anderer Drehantrieb bezeichnet, der direkt oder indirekt eine Drehung eines Arms 62 antreibt und so ein an ein freies des Arms 62 angelenktes Ende einer Pleuelstange 63 auf einer Kreisbahn bewegt. Das zweite Ende der Pleuelstange 63 greift an einem Arm 64 an, der um eine Achse 65 zwischen zwei Anschlägen 66 schwenkbar ist. In der Stellung der Fig. 12A befindet sich der Arm 64 in einer Mittelstellung zwischen den zwei Anschlägen 66.

Ein in die Pleuelstange 63 eingefügtes elastisch längenveränderliches Federelement 67 befindet sich in einer entspannten Stellung. Das Federelement 67 kann zum Beispiel durch ein in einem Zylinder eingeschlossenes Gasvolumen, eine zwischen ineinander greifenden Hülsen linear geführte Schraubenfeder oder dergleichen gebildet sein.

Fig. 12B zeigt eine Konfiguration des Antriebsmechanismus, in der der Arm 62 soweit im Gegenuhrzeigersinn weiter gedreht ist, dass der Arm 64 an den linken Anschlag 66 stößt. Der Arm 62 rotiert vom Motor 61 angetrieben weiter, doch da der Arm 64 nicht weiter ausgelenkt werden kann, führt dies zu einer Stauchung des Federelements 67.

Fig. 12C zeigt den maximal gestauchten Zustand des Federelements 67, in dem die Pleuelstange 63 mit dem Arm 62 eine gerade Linie bildet.

Wenn der Arm 62 aus der Konfiguration der Figur 12C weiter rotiert, streckt sich zunächst das Federelement 67 wieder aus, bis es wieder den entspannten Zustand erreicht hat, erst dann folgt der Arm 64 der Drehung des Arms 62, bis er am rechten Anschlag 66 erneut gestoppt wird. Während der Arm 64 am rechten Anschlag 66 festgehalten wird, wird das Federelement 67 elastisch gedehnt. Nach Rückkehr des Federelements 67 in den entspannten Zustand wird schließlich die Konfiguration der Fig. 12A wieder erreicht.

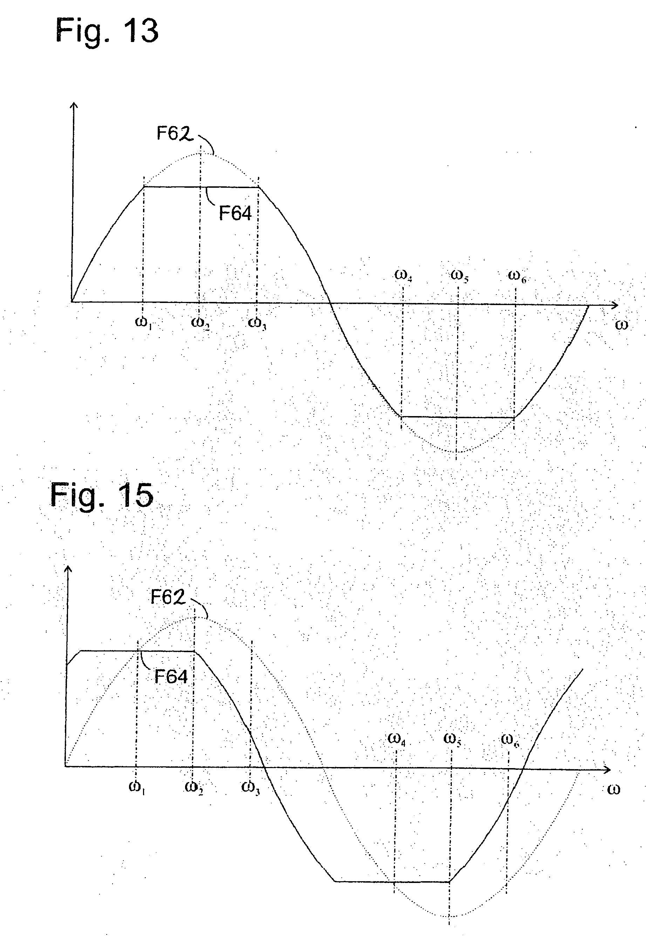

Fig. 13 veranschaulicht den Zusammenhang zwischen der Drehung des Arms 62 und der Pendelbewegung des Arms 64. Die in dem Diagramm der Fig. 13 mit F62 bezeichnete Kurve bezeichnet die Koordinate des den Arm 62 mit der Pleuelstange 63 verbindenden Gelenks bezogen auf die Längsrichtung der Pleuelstange 63 in Fig. 12C. Wenn der Arm 62 mit gleichförmiger Geschwindigkeit rotiert, hat die Kurve F62 bekanntlich einen sinusförmigen Verlauf. Die Kurve F64, die die entsprechende Koordinate des Gelenks zwischen Pleuelstange 63 und Arm 64 angibt, folgt dem Verlauf der Kurve F62 so lange, bis der Arm 64 am Drehwinkel ω₁ die Stellung der Fig. 12B erreicht. Von diesem Punkt an bleibt der Arm 64 so lange in Ruhe, bis nach Durchgang des Arms 62 durch den Totpunkt ω₂ das Federelement 67 bei ω₃ wieder entspannt ist. Dasselbe wiederholt sich zwischen ω₄ und ω₆, wenn der Arm 62 den zweiten Totpunkt ω₅ seiner Bewegung an der von dem Arm 64 abgewandten Seite durchläuft.

Als längenveränderliches Element muss nicht unbedingt ein Federelement verwendet werden; Fig. 14 zeigt eine Variante der Pleuelstange 63, die als längenveränderliches Element einen Dämpfer 68, hier in Form eines fluidgefüllten Zylinders 69, in dem ein Kolben 70 mit einer Drosselstelle 71 verschiebbar ist, umfasst. Wenn die mit einem solchen Dämpfer 68 versehene Pleuelstange 63 die Konfiguration der Fig. 12B erreicht, beginnt der vom Arm 62 angetriebene Kolben 70, sich in dem Zylinder 69 zu verschieben, wobei das Fluid die Drosselstelle 71 passiert. Der Strömungswiderstand des Fluids an der Drosselstelle 71 ist so bemessen, dass unmittelbar nach Passieren der Konfiguration der Fig. 12C die Pleuelstange 63 den Arm 64 vom linken Anschlag 66 fortzieht. Erst wenn der Arm auf den rechten Anschlag 66 trifft, beginnt die Pleuelstange 63, sich wieder zu dehnen.

Fig. 15 zeigt ein zu Fig. 13 analoges Diagramm für den in Fig. 14 gezeigten Fall der Pleuelstange 63 mit Dämpfer 68. Da der Arm 64 bei dieser Ausgestaltung sich sofort wieder zu bewegen beginnt, wenn der Arm 62 einen Totpunkt ω₂ oder ω₅ passiert hat, ergibt sich eine Phasenverschiebung zwischen den zwei Kurven F62 und F64; die Gestalt, d.h. der zeitliche Verlauf der Bewegungen der Arme 62, 64, ist jedoch in beiden Fällen der gleiche.

Es ist leicht vorstellbar, dass Dämpfer und Federelement in der Pleuelstange kombiniert sein können, um z.B. jeweils bei Lastwechsel auftretende Schwingungen des Federelements zu dämpfen.

Der angetriebene Arm 64 kann jeweils mit dem Lenker 47 aus Fig. 3 oder dem Lenker 58 aus Fig. 6 identisch sein (wobei in letzterem Fall die Pleuelstange 63 der Fig. 12A - 12C mit der Pleuelstange 59 der Fig. 7 oder 8 gleich gesetzt werden kann), oder er kann in beliebiger geeigneter Weise, zum Beispiel über die in Fig. 8 bzw. 9 gezeigte Pleuelstange 59, an den Lenker 47 bzw. 58 oder an den Querbügel 85 der Fig. 9 oder 10 gekoppelt sein.

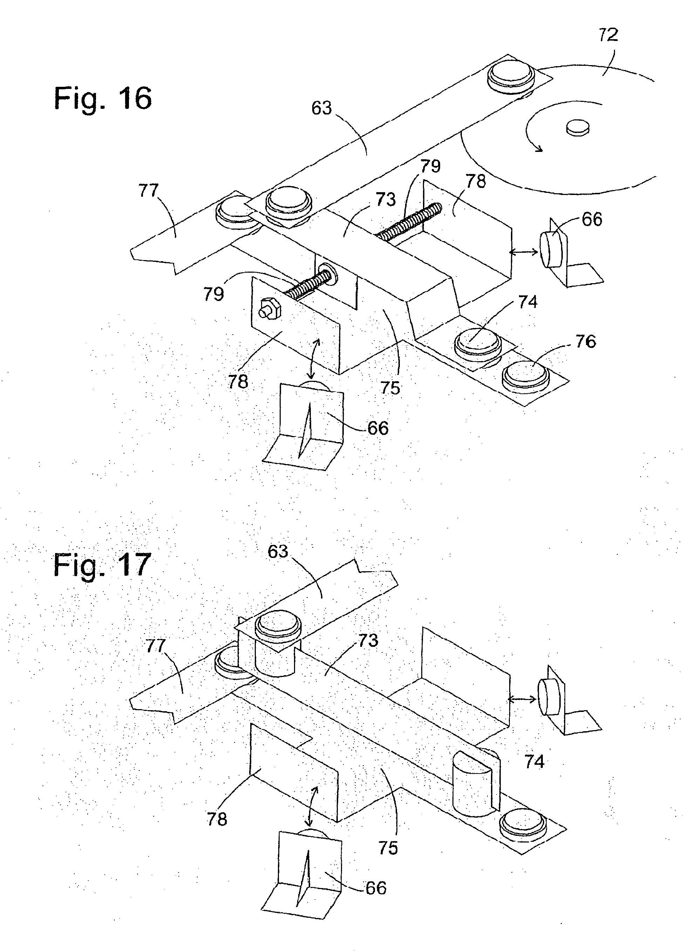

Eine bevorzugte Ausgestaltung des Antriebsmechanismus ist in Fig. 16 in einer schematischen perspektivischen Ansicht dargestellt. Eine drehangetriebene Scheibe, deren Funktion der des Arms 62 in Fig. 12A - 12C entspricht, ist mit 72 bezeichnet. Die Pleuelstange 63 koppelt die Scheibe 72 an ein freies Ende eines ersten Schwenkarms 73, der an seinem entgegen gesetzten Ende 74 an einen zweiten Schwenkarm 75 angelenkt ist. Der Schwenkarm 75 ist in Draufsicht in etwa kreuzförmig, wobei ein dem Ende 74 des Schwenkarms 73 benachbartes Ende 76 an ein nicht dargestelltes ortsfestes Trägerteil, zum Beispiel die Oberseite 36 der Düse 34, angelenkt ist und ein entgegen gesetztes Ende an einer Koppelstange 77 angelenkt ist, die wiederum am Lenker 47 oder 58 angreift. Der Querbalken des kreuzförmigen Schwenkarms 75 hat an seinen Enden zwei hochgebogene Laschen 78, die einerseits vorgesehen sind, um in den Anschlagstellungen des Schwenkarms 75 mit einem der Anschläge 66 in Kontakt zu kommen, und die zwei spiegelbildlich zueinander gegen den Schwenkarm 73 gerichtete Federelemente 79 tragen. Die Federelemente 79 umfassen jeweils eine durch eine Schraube gegen den Schwenkarm 73 vorgespannt gehaltene Schraubenfeder.

Solange der Schwenkarm 75 keinen Anschlag 66 berührt, verhalten sich die beiden Schwenkarme 73, 75 wie eine starre Einheit, die die Bewegung der Pleuelstange 63 auf die Koppelstange 77 überträgt. Sobald der Schwenkarm 75 einen jeweils einer maximal nach rechts bzw. links ausgelenkten Stellung des Verteilers entsprechenden Anschlag 66 erreicht, bleibt die Koppelstange 77 stehen, und der Arm 73 schwenkt gegen den Arm 75, wobei er eines der Federelemente 79 staucht.

Fig. 17 zeigt eine abgewandelte Ausgestaltung des Antriebsmechanismus, die sich von derjenigen der Fig. 16 im Wesentlichen dadurch unterscheidet, dass der Schwenkarm 73 als eine Blattfeder ausgebildet ist. Die Blattfeder 73 ist an ihrem Ende 74 torsionssteif mit dem Schwenkarm 75 verbunden, und an ihr freies Ende ist schwenkbar die Pleuelstange 63 angekoppelt. Solange sich der Schwenkarm 75 zwischen den Anschlägen 66 bewegt, verformt sich der Schwenkarm 73 im Wesentlichen nicht; erst wenn der Schwenkarm 75 an einem der Anschläge 66 anliegt, biegt sich der Schwenkarm 73, um eine kontinuierliche Weiterbewegung der Pleuelstange 63 zu ermöglichen, während gleichzeitig die Koppelstange 77 und mit ihr die von ihr gesteuerten Leitbleche 39, 55, 82 in einer Anschlagstellung in Ruhe bleiben.

### Bezugszeichen

- 1: Mähdrescher
- 2: Axialabscheider
- 3: Schneidwerk
- 4: Drescheinrichtung
- 5: Reinigungseinrichtung
- 6: Korntank
- 7: Fahrerkabine
- 8: Strohhäcksler
- 9: Erntegut
- 10: Schrägförderkanal
- 11: Dreschtrommel
- 12: Dreschkorb
- 13: Förderboden
- 19: Gebläse
- 15: Obersieb
- 16: Untersieb
- 17: Wendetrommel
- 18: Gehäuse
- 19 20: Abscheideröst
- 21: Deckbereich
- 22: Rücklaufboden
- 23: FörderscHnecke
- 24: Elevator
- 25: Kante
- 26: Trichter
- 27: Auslassschlitz
- 28: Welle
- 29: Gehäuse
- 30: Einfüllöffnung
- 31: Öffnung
- 32: rotierende Messer
- 33: gehäusefeste Messer
- 34: Düse
- 35: Seitenwand
- 36: Oberseite
- 37: Rahmen
- 38: Verteiler
- 39: Leitbleche
- 40: Archse
- 41: Mittelstrück
- 42: Seitenstücke
- 43: Steg
- 44: Lenker
- 45: Arm
- 46: Querbügel
- 47: Lenker
- 48: Achse
- 49: Symmetrieebene
- 50: Gelenk
- 51: Lager
- 52: mittlerer Abschnitt
- 53: äußerer Abschnitt
- 54: Luftschaufel
- 55: Leitbleche
- 56: Deckplatte
- 57: Lenker
- 58: Lenker
- 59: Pleuelstange
- 60: Langloch
- 61: Motor
- 62: Arme
- 63: Pleuelstange
- 64: Arm
- 65: Achse
- 66: Anschlag
- 67: Federelement
- 68: Dämpfer
- 69: Zylinder
- 70: Kolben
- 71: Drosselstelle
- 72: Scheibe
- 73: Schwenkarm
- 74: Enden
- 75: Schwenkarm
- 76: Ende
- 77: Koppelstange
- 78: Lasche
- 79: Federelement
- 80: Engpass
- 81: Steg
- 82: Leitblech
- 83: Segment
- 84: Lenker
- 85: Querbügel
- 86: Pfeil
- 87: Führungselement
- 88: Seitenwand
- 89: Steg
- 90: Achse
- 91: Führungselement
- 92: Führungselement
- 93: Seitenwand
- 94: Schwenkarm
- 95: Steg
- 96: Lenker
- 97: Lenker
- 98: elastisches Element

## Patentansprüche

1. Mähdrescher mit einem Strohhäcksler (8), der eine mit Messern (32) besetzte rotierende Welle (28) aufweist, und einem Umlenker zum Empfangen eines Stroms von gehäckseltem Stroh von dem Strohhäcksler (8) und zum Ausstreuen des gehäckselten Strohs, **dadurch gekennzeichnet, dass** der Strohhäcksler (8) eingerichtet ist, gehäckseltes Stroh entgegen der Fahrtrichtung des Mähdreschers auszuschleudern, und dass auf dem Weg des Strohs von dem Strohhäcksler (8) zu dem in Fahrtrichtung hinter dem Strohhäcksler (8) platzierten Umlenker ein Engpass (80) zum Einschnüren des Querschnitts des Stroms wenigstens in Längsrichtung der Welle (28) angeordnet ist.

2. Mähdrescher nach Anspruch 1, **dadurch gekennzeichnet, dass** die lichte Weite des Engpasses (80) in Längsrichtung der Welle (28) höchstens zwei Drittel der Breite eines mit den Messern besetzten Abschnitts (52) der Welle (28) beträgt.

3. Mähdrescher nach Anspruch 1 oder 2, **dadurch gekennzeichnet, dass** die lichte Weite des Engpasses (80) in Längsrichtung der Welle (28) mindestens ein Viertel der wirksamen Breite des Strohhäckslers (8) beträgt.

4. Mähdrescher nach einem der vorhergehenden Ansprüche, **dadurch gekennzeichnet, dass** der Strohhäcksler (8) durch Stroh von einem einzigen Axialabscheider (2) gespeist ist.

5. Mähdrescher nach einem der vorhergehenden Ansprüche, **dadurch gekennzeichnet, dass** zwischen einem Austrittsspalt (27) des Strohhäckslers (8) und dem Engpass (80) der Strom durch aufeinander zulaufende, eine Düse (34) bildende seitliche Wände (35) geführt ist.

6. Mähdrescher nach einem der vorhergehenden Ansprüche, **gekennzeichnet durch** wenigstens ein Gebläse zum Erzeugen eines vom Strohhäcksler (8) **durch** den Engpass (80) verlaufenden Luftstromes.

7. Mähdrescher nach Anspruch6, **dadurch gekennzeichnet, dass** das Gebläse durch von einer Welle (28) des Strohhäckslers (8) getragene Luftschaufeln (54) gebildet ist.

8. Mähdrescher nach Anspruch 5 oder 6, **dadurch gekennzeichnet, dass** jeweils ein Gebläse auf jeder Seite eines mit Messern (32) besetzten Abschnitts (52) des Strohhäcksler (8) vorgesehen ist.

9. Mähdrescher nach einem der vorhergehenden Ansprüche, **dadurch gekennzeichnet, dass** der pendelnd bewegbare Umlenker zwei Leitbleche (39; 55) beiderseits des Engpasses (80) aufweist.

10. Mähdrescher nach Anspruch 9, **dadurch gekennzeichnet, dass** die zwei Leitbleche (55) starr miteinander verbunden sind.

11. Mähdrescher nach Anspruch 10, **dadurch gekennzeichnet, dass** die zwei Leitbleche (55) in Strahlrichtung konvergieren.

12. Mähdrescher nach Anspruch 9, **dadurch gekennzeichnet, dass** die Leitbleche (39) um verschiedene, jeweils einem Rand des Engpasses (80) benachbarte Achsen (40) schwenkbar sind.

13. Mähdrescher nach Anspruch 12, **dadurch gekennzeichnet, dass** die Leitbleche (39) des Umlenkers gekoppelt sind, um aus einer zur Fahrtrichtung symmetrischen Stellung jeweils zur gleichen Seite zu schwenken, wobei die Winkelauslenkung des in Schwenkrichtung gelegenen Leitbleches (39) jeweils größer ist als die des entgegen der Schwenkrichtung gelegenen Leitbleches (39).

14. Mähdrescher nach Anspruch 13, **dadurch gekennzeichnet, dass** der freie Querschnitt des Umlenkers in einer zur ersten Strahlachse symmetrischen Stellung nicht größer als in einer aus der symmetrischen Stellung ausgelenkten Stellung ist.

15. Mähdrescher nach Anspruch 13 oder 14, **dadurch gekennzeichnet, dass** die Leitbleche (39) des Umlenkers von ihren Außenseiten abstehende Ausleger (45) tragen und dass eine Koppelstange (46) an die Ausleger (45) angelenkt ist.

16. Mähdrescher nach Anspruch 15, **dadurch gekennzeichnet, dass** der Abstand zwischen zwei Gelenken (50), die die Leitbleche (39) des Umlenkers mit der Koppelstange (46) verbinden, größer ist als der Abstand zwischen zwei Gelenken, die die Leitbleche (39) des Umlenkers mit den Rändern des Engpasses (80) verbinden.

17. Mähdrescher nach Anspruch 5 und einem der Ansprüche 9 bis 16, **dadurch gekennzeichnet, dass** der Umlenker zwischen zwei Anschlagstellungen bewegbar ist, in denen jeweils ein Leitblech (39; 55) des Umlenkers eine angrenzende Seitenwand (35) der Düse (34) richtungsgleich verlängert.

18. Mähdrescher nach einem der Ansprüche 1 bis 8, **dadurch gekennzeichnet, dass** der Umlenker wenigstens eine den Engpass kreuzende Wand umfasst.

19. Mähdrescher nach Anspruch 18, **dadurch gekennzeichnet, dass** die Wand des Umlenkers aus mehreren untereinander gelenkig verbundenen Segmenten (83) zusammengesetzt ist.

20. Mähdrescher nach Anspruch 18, **dadurch gekennzeichnet, dass** die Wand des Umlenkers eine Mehrzahl von auf einem federelastischen Träger (98) befestigten Segmenten (83) umfasst.

21. Mähdrescher nach Anspruch 18, **dadurch gekennzeichnet, dass** die Wand des Umlenkers aus mehreren um eine gemeinsame Achse (90) drehend teleskopierbaren Segmenten zusammengesetzt ist.

22. Mähdrescher nach einem der Ansprüche 9 bis 21, **dadurch gekennzeichnet, dass** eine dem Strom des Strohs ausgesetzte Seite der Leitbleche (39; 55; 82) des Umlenkers im Schnitt quer zur Stromrichtung konkav ist.

## Claims

1. A combine harvester having a straw chopper (8) which has a rotating shaft (28) fitted with blades (32), and a deflector for receiving a flow of chopped straw from the straw chopper (8) and for scattering the chopped straw, **characterised in that** the straw chopper (8) is adapted to discharge chopped straw in opposite relationship to the direction of travel of the combine harvester, and that arranged on the path of the straw from the straw chopper (8) to the deflector placed downstream of the straw chopper (8) in the direction of travel is a constriction (80) for constricting the cross-section of the flow at least in the longitudinal direction of the shaft (28).

2. A combine harvester according to claim 1 **characterised in that** the internal width of the constriction (80) in the longitudinal direction of the shaft (28) is at most two thirds of the width of a portion (52) of the shaft (28), that is fitted with the blades.

3. A combine harvester according to claim 1 or claim 2 **characterised in that** the internal width of the constriction (80) in the longitudinal direction of the shaft (28) is at least a quarter of the effective width of the straw chopper (8).

4. A combine harvester according to one of the preceding claims **characterised in that** the straw chopper (8) is fed by straw from a single axial separator (2).

5. A combine harvester according to one of the preceding claims **characterised in that** between an exit gap (27) of the straw chopper (8) and the constriction (80) the flow is guided by lateral walls (35) converging towards each other and forming a nozzle (34).

6. A combine harvester according to one of the preceding claims **characterised by** at least one fan for producing an air flow going from the straw chopper (8) through the constriction (80).

7. A combine harvester according to claim 6 **characterised in that** the fan is formed by air vanes (54) carried by a shaft (28) of the straw chopper (8).

8. A combine harvester according to claim 5 or claim 6 **characterised in that** a respective fan is provided on each side of a portion (52) of the straw chopper (8), that is fitted with blades (32).

9. A combine harvester according to one of the preceding claims **characterised in that** the swingingly movable deflector has two guide plates (39; 55) on both sides of the constriction (80).

10. A combine harvester according to claim 9 **characterised in that** the two guide plates (55) are rigidly connected together.

11. A combine harvester according to claim 10 **characterised in that** the two guide plates (55) converge in the jet direction.

12. A combine harvester according to claim 9 **characterised in that** the guide plates (39) are pivotable about different axes (40) respectively adjacent to an edge of the constriction (80).

13. A combine harvester according to claim 12 **characterised in that** the guide plates (39) of the deflector are coupled to pivot respectively to the same side from a symmetrical position relative to the direction of travel, wherein the angular deflection of the guide plate (39) which is placed in the pivotal direction is respectively greater than that of the guide plate (39) which is placed in opposite relation to the pivotal direction.

14. A combine harvester according to claim 13 **characterised in that** the free cross-section of the deflector in a symmetrical position relative to the first jet axis is not greater than in a position of being deflected out of the symmetrical position.

15. A combine harvester according to claim 13 or claim 14 **characterised in that** the guide plates (39) of the deflector carry cantilever arms (45) projecting from their outsides and that a coupling bar (46) is pivotably connected to the cantilever arms (45).

16. A combine harvester according to claim 15 **characterised in that** the spacing between two pivot joints (50) connecting the guide plates (39) of the deflector to the coupling bar (46) is greater than the spacing between two pivot joints connecting the guide plates (39) of the deflector to the edges of the constriction (80).

17. A combine harvester according to claim 5 and one of claims 9 to 16 **characterised in that** the deflector is movable between two abutment positions in which a guide plate (39; 55) of the deflector respectively prolongs an adjoining side wall (35) of the nozzle (34) in the same direction.

18. A combine harvester according to one of claims 1 to 9 **characterised in that** the deflector includes at least one wall crossing the constriction.

19. A combine harvester according to claim 18 **characterised in that** the wall of the deflector is composed of a plurality of segments (83) hingedly connected together.

20. A combine harvester according to claim 18 **characterised in that** the wall of the deflector includes a plurality of segments (83) fixed to a resilient carrier (98).

21. A combine harvester according to claim 18 **characterised in that** the wall of the deflector is composed of a plurality of segments which are telescopic in rotation about a common axis (90).

22. A combine harvester according to one of claims 9 to 21 **characterised in that** a side of the guide plates (39; 55; 82) of the deflector, that is exposed to the flow of the straw, is concave in section transversely relative to the flow direction.

## Revendications

1. Moissonneuse-batteuse dotée d'un système à hacher la paille (8), qui présente un arbre (28) rotatif équipé de couteaux (32), et d'un système de renvoi servant à recevoir un flux de paille hachée du système à hacher la paille (8) et à éparpiller la paille hachée, **caractérisée en ce que** le système à hacher la paille (8) est conçu pour projeter la paille hachée dans le sens opposé au sens de déplacement de la moissonneuse-batteuse et **en ce qu'**un goulot d'étranglement (80) permettant de rétrécir la section transversale du flux au moins dans le sens longitudinal de l'arbre (28) est disposé sur le trajet de la paille allant du système à hacher la paille (8) au système de renvoi placé derrière le système à hacher la paille (8) dans le sens de déplacement.

2. Moissonneuse-batteuse selon la revendication 1, **caractérisée en ce que** la largeur intérieure du goulot d'étranglement (80) dans le sens longitudinal de l'arbre (28) est égale au maximum à deux tiers de la largeur d'une section (52) de l'arbre (28) équipée des couteaux.

3. Moissonneuse-batteuse selon la revendication 1 ou 2, **caractérisée en ce que** la largeur intérieure du goulot d'étranglement (80) dans le sens longitudinal de l'arbre (28) est égale à au moins un quart de la largeur active du système à hacher la paille (8).

4. Moissonneuse-batteuse selon l'une quelconque des revendications précédentes, **caractérisée en ce que** le système à hacher la paille (8) est alimenté en paille par un seul séparateur axial (2).

5. Moissonneuse-batteuse selon l'une quelconque des revendications précédentes, **caractérisée en ce que** le flux est guidé, entre une fente de sortie (27) du système à hacher la paille (8) et le goulot d'étranglement (80), par des parois latérales (35) convergeant l'une vers l'autre formant une buse (34).

6. Moissonneuse-batteuse selon l'une quelconque des revendications précédentes, **caractérisée par** au moins une soufflante permettant de générer un courant d'air allant du système à hacher la paille (8) en passant par le goulot d'étranglement (80).

7. Moissonneuse-batteuse selon la revendication 6, **caractérisée en ce que** la soufflante est formée d'aubes à air (54) portées par un arbre (28) du système à hacher la paille (8).

8. Moissonneuse-batteuse selon la revendication 5 ou 6, **caractérisée en ce qu'**il est prévu respectivement une soufflante de chaque côté d'une section (52) du système à hacher la paille (8) équipée de couteaux (32).

9. Moissonneuse-batteuse selon l'une quelconque des revendications précédentes, **caractérisée en ce que** le système de renvoi à mouvement pendulaire présente deux tôles de guidage (39 ; 55) des deux côtés du goulot d'étranglement (80).

10. Moissonneuse-batteuse selon la revendication 9, **caractérisée en ce que** les deux tôles de guidage (55) sont reliées l'une à l'autre de manière rigide.

11. Moissonneuse-batteuse selon la revendication 10, **caractérisée en ce que** les deux tôles de guidage (55) convergent dans le sens du jet.

12. Moissonneuse-batteuse selon la revendication 9, **caractérisée en ce que** les tôles de guidage (39) peuvent pivoter autour de différents axes (40) respectivement adjacents à un bord du goulot d'étranglement (80).

13. Moissonneuse-batteuse selon la revendication 12, **caractérisée en ce que** les tôles de guidage (39) du système de renvoi sont couplées pour pivoter hors d'une position symétrique au sens de déplacement respectivement du même côté, la déviation angulaire de la tôle de guidage (39) située dans le sens de pivotement étant respectivement supérieure à celle de la tôle de guidage (39) située dans le sens opposé au sens de pivotement.

14. Moissonneuse-batteuse selon la revendication 13, **caractérisée en ce que** la section transversale libre du système de renvoi dans une position symétrique au premier axe du jet n'est pas plus grande que dans une position déviée de la position symétrique.

15. Moissonneuse-batteuse selon la revendication 13 ou 14, **caractérisée en ce que** les tôles de guidage (39) du système de renvoi portent des bras (45) faisant saillie de leurs côtés extérieurs et **en ce qu'**une barre d'accouplement (46) est articulée aux bras (45).

16. Moissonneuse-batteuse selon la revendication 15, **caractérisée en ce que** la distance entre deux articulations (50) qui relient les tôles de guidage (39) du système de renvoi à la barre d'accouplement (46) est supérieure à la distance entre deux articulations qui relient les tôles de guidage (39) du système de renvoi aux bords du goulot d'étranglement (80).

17. Moissonneuse-batteuse selon la revendication 5 et l'une quelconque des revendications 9 à 16, **caractérisée en ce que** le système de renvoi peut être déplacé entre deux positions de butée dans lesquelles respectivement une tôle de guidage (39 ; 55) du système de renvoi prolonge une paroi latérale (35) adjacente de la buse (34) dans la même direction.

18. Moissonneuse-batteuse selon l'une quelconque des revendications 1 à 8, **caractérisée en ce que** le système de renvoi comprend au moins une paroi croisant le goulot d'étranglement.

19. Moissonneuse-batteuse selon la revendication 18, **caractérisée en ce que** la paroi du système de renvoi se compose de plusieurs segments (83) reliés les uns aux autres de manière articulée.

20. Moissonneuse-batteuse selon la revendication 18, **caractérisée en ce que** la paroi du système de renvoi comprend une pluralité de segments (83) fixés sur un support à déformation élastique (98).

21. Moissonneuse-batteuse selon la revendication 18, **caractérisée en ce que** la paroi du système de renvoi se compose de plusieurs segments télescopiques par rotation autour d'un axe commun (90).

22. Moissonneuse-batteuse selon l'une quelconque des revendications 9 à 21, **caractérisée en ce que** la coupe transversale au sens d'écoulement d'un côté soumis au flux de paille des tôles de guidage (39 ; 55 ; 82) du système de renvoi est concave.
